# EUROPEAN PATENT APPLICATION

(11) **EP 1 793 205 A1**
(43) Date of publication of application: **06.06.2007**
(21) Application number: 06125005.6
(22) Date of filing: 29.11.2006
(51) Int. Cl.: G01C 21/36

(54) **Route guidance system and route guidance method**

(30) Priority: 30.11.2005 JP 2005346789
(71) Applicant: Aisin AW Co., Ltd., Fujii-cho Anjo Aichi 444-1192 (JP)
(72) Inventor: Nakayama, Takaaki, Okazaki Aichi 444-8564 (JP); Oonishi, Shino, Okazaki Aichi 444-8564 (JP); Takeuchi, Kensuke, Okazaki Aichi 444-8564 (JP); Kato, Kiyohide, Okazaki Aichi 444-8564 (JP)
(74) Representative: TBK-Patent

(57) **Abstract**

A route guidance system comprises: a current-location detecting unit for detecting the current location of a self-vehicle; a route-searching processing unit for searching a searched route up to a destination based on the self-vehicle location; a guidance-intersection setting processing unit for setting a guidance intersection based on the searched route; a route guidance point setting processing unit for setting a route guidance point on the near side of a guidance intersection; a change conditions determination processing unit for calculating a route guidance region from the start to the end of route guidance based on the route guidance point and the contents of route guidance, and determining whether or not the route guidance region overlaps a predetermined intersection from the self-vehicle to the guidance intersection; and a region setting processing unit for changing the route guidance region in the event that the route guidance region overlaps with the predetermined intersection.

## Description

### 1. Field of the Invention

The present invention relates to a route guidance system and a route guidance method.

### 2. Description of the Related Art

Heretofore, with a navigation system device, for example, an arrangement is made wherein the current location of a vehicle by GPS (Global Positioning System), i.e., the current location is detected, map data is read out from a data recording unit, a map screen is displayed on a display unit, and the self-vehicle location representing the current location, the map around the self-vehicle, and so forth are displayed on this map screen. Accordingly, a driver can drive a vehicle in accordance with the self-vehicle location and so forth displayed on the map screen.

Also, upon the driver inputting a destination, and setting search conditions, route-searching processing is performed based on these search conditions, and a route from a departing location represented with the current location to the destination is searched in accordance with the map data. Subsequently, the route which has been searched, i.e., the searched route is displayed on the map screen together with the self-vehicle location, and guidance of the searched route, i.e., route guidance is performed. Accordingly, the driver can drive the vehicle along the displayed searched route.

Incidentally, with such route guidance, an arrangement is made wherein in the event that it is necessary to turn the vehicle to the right/left at a predetermined intersection, before the vehicle reaches the intersection, i.e., the guidance intersection, e.g., voice is output to perform route guidance. Accordingly, one or more route guidance points are set at points apart from the guidance intersection only each predetermined distance before the guidance intersection on the searched route, and upon the vehicle reaching each of the route guidance points, guidance of contents which are set beforehand for each of the route guidance points is output with voice (e.g., see Japanese Unexamined Patent Application Publication No. 6-295399)

However, with the above-mentioned conventional navigation device, each of the route guidance points are uniformly set based on the distance from the guidance intersection, so there may be cases wherein, upon the vehicle driving through an intersection on the near side of the guidance intersection while route information is being performed, the number of roads intersected at intersections up to the guidance intersection which the driver recognizes, and the number of roads guided by the route guidance, do not match.

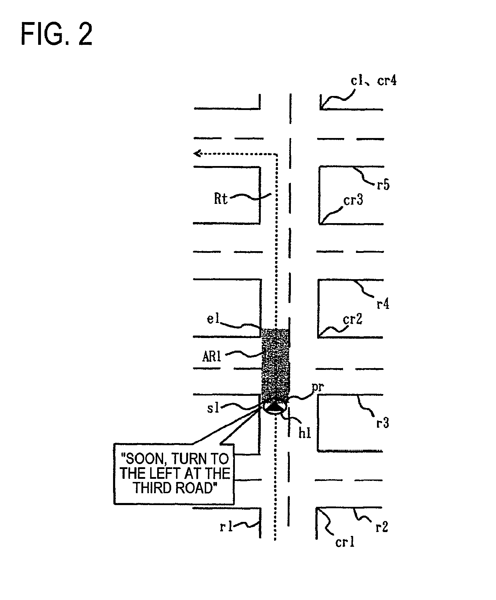

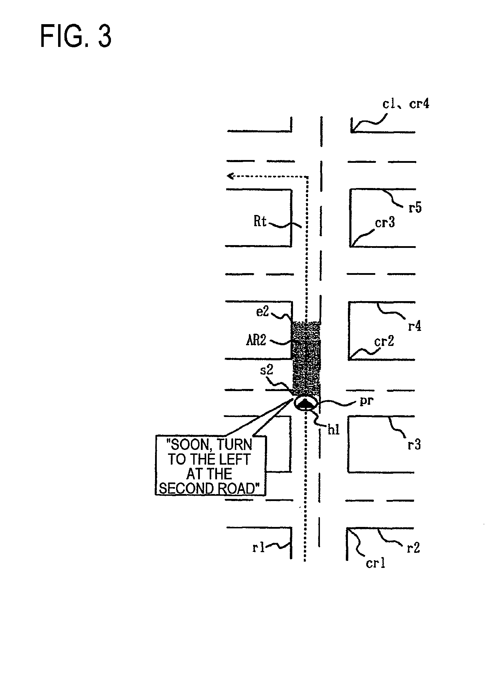

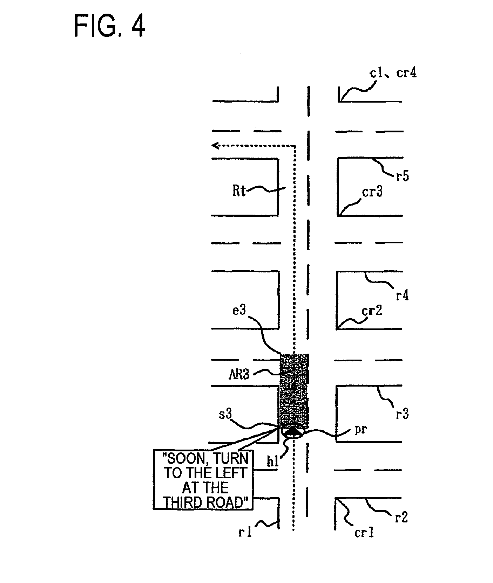

Fig. 2 is a first diagram for describing conventional route guidance, Fig. 3 is a second diagram for describing conventional route guidance, and Fig. 4 is a third diagram for describing conventional route guidance.

In the drawings, ri (i = 1, 2, ···) represents roads, and crj (j = 1, 2, ···) represents intersections, with roads r1 and r2 intersecting at intersection cr1, roads r1 and r3 at intersection cr2, roads r1 and r4 at intersection cr3, and roads r1 and r5 at intersection cr4. Also, Rt represents a searched route, with the searched route Rt set so as to pass over the road r1, turn left at intersection cr4, and turn off to road r5, the intersection cr4 having been set to guidance intersection c1. Also, pr represents the self-vehicle location, and h1 represents the route guidance point.

Upon the vehicle reaching the route guidance point h1, route guidance is performed regarding the guidance intersection c1, and a preset message is output by voice.

In this case, a route guidance region AR1 is formed within a region from a route guidance start point s1 where the route guidance starts, to a route guidance end point e1 where the route guidance ends. Note that the distance over which the route guidance region AR1 is formed can be calculated based on the time from starting to ending of the route guidance (playback time of the voice phrase), and the vehicle speed.

Now, in Fig. 2, the route guidance start point s1 is set at the near side of the intersection cr2, and the route guidance end point e1 is set beyond the intersection cr2. Upon the vehicle reaching the route guidance point h1, a message such as "Soon, turn left at the third road" or the like is output.

Also, in Fig. 3, the route guidance start point s2 is set within the intersection cr2, and the route guidance end point e2 is set beyond the intersection cr2. Upon the vehicle reaching the route guidance point h1, a message such as "Soon, turn left at the second road" or the like is output.

Also, in Fig. 4, the route guidance start point s3 is set at the near side of the intersection cr2, and the route guidance end point e3 is set within the intersection cr2. Upon the vehicle reaching the route guidance point h1, a message such as "soon, turn left at the third road" or the like is output.

In this way, there are cases wherein traveling of the vehicle through the intersection cr2 while the route guidance is being performed may result in the number of roads intersected at intersections up to the guidance intersection c1 which the driver recognizes, and the number of roads guided by the route guidance, not matching.

Accordingly, the vehicle cannot be driven along the searched route in a sure manner following the route guidance.

Accordingly, it is an object of the present invention to solve the problems of conventional navigation devices by providing a route guidance system and a route guidance method whereby a vehicle can be driven along a searched route in a sure manner following route guidance at each route guidance point.

To this end, the route guidance system according to the present invention comprises: a current-location detecting unit for detecting the current location of a self-vehicle as a self-vehicle location; route-searching processing means for searching a searched route up to a destination based on the self-vehicle location; guidance-intersection setting processing means for setting a guidance intersection based on the searched route; route guidance point setting processing means for setting a route guidance point at a predetermined point on the near side of a guidance intersection, for performing route guidance regarding the guidance intersection; change conditions determination processing means for calculating a route guidance region from the start to the end of route guidance based on the position of the route guidance point and the contents of route guidance, and determining whether or not the route guidance region overlaps a predetermined intersection from the self-vehicle location to the guidance intersection; and region setting processing means for changing the route guidance region in the event that the route guidance region overlaps with the predetermined intersection.

According to the present invention, a route guidance region from the start to the end of route guidance is calculated, and in the event that the route guidance region overlaps the predetermined intersection from the self-vehicle location to the guidance intersection, the route guidance region is changed, thereby eliminating cases wherein the vehicle is passing through an intersection on the near side of a guidance intersection when route guidance is being given. Accordingly, the number of branch elements up to the guidance intersection which the driver recognizes, and the number of branch elements regarding which guidance is performed by route guidance, match. Consequently, the vehicle can be driven along the searched route in a sure manner by following the route guidance.

Fig. 1 is a diagram illustrating a navigation system according to an embodiment of the present invention.

Fig. 2 is a first diagram for describing conventional route guidance.

Fig. 3 is a second diagram for describing conventional route guidance.

Fig. 4 is a third diagram for describing conventional route guidance.

Fig. 5 is a flowchart illustrating the operations of guiding processing means according to an embodiment of the present invention.

Fig. 6 is a first diagram for describing an example of route guidance according to an embodiment of the present invention.

Fig. 7 is a second diagram for describing an example of route guidance according to an embodiment of the present invention.

An embodiment of the present invention will now be described in detail with reference to the drawings. Note that in this case, a navigation system serving as a route guidance system will be described.

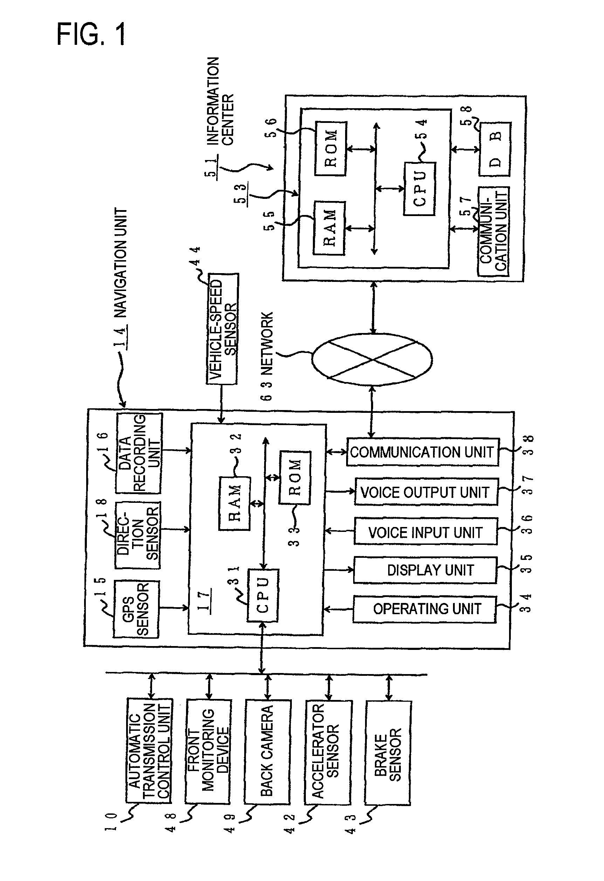

Fig. 1 is a diagram illustrating a navigation system according to a first embodiment of the present invention.

In the diagram, reference numeral 10 denotes an automatic transmission control unit serving as a power train control unit, and this automatic transmission control unit 10 performs control for a power train performing gear shifting at a predetermined gear shifting ratio, for example, a Continuously Variable Transmission (CVT) serving as a non-step transmission, a stepped transmission (automatic transmission), an electric drive device, and so forth.

Also, reference numeral 14 denotes an information terminal, for example a navigation device serving as an on-board device mounted on a vehicle, 63 denotes a network, 51 denotes an information center serving as an information provider, and the navigation system comprises the automatic transmission control 10, navigation device 14, network 63, information center 51, and so forth.

The navigation device 14 has a GPS sensor 15 serving as a current location detecting unit for detecting the current location of the self-vehicle, a data recording unit 16 serving as an information recording unit wherein various information other than map data is recorded, a navigation processing unit 17 for performing various computing processing such as navigation processing or the like based on input information, a direction sensor 18 serving as a direction detecting unit which detects the direction of the self-vehicle, an operating unit 34 serving as a first input unit for the purpose of the driver serving as an operator to perform predetermined input, a display unit 35 serving as a first output unit for the purpose of notifying the driver, by performing various types of display by images displayed on an screen not shown in the drawings, a voice input unit 36 serving as a second input unit for the purpose of the driver serving as an operator to perform predetermined input by voice, a voice output unit 37 serving as a second output unit for the purpose of notifying the driver by performing various types of display by voice, and a communication unit 38 serving as a transmitting/receiving unit which functions as a communication terminal, and the GPS sensor 15, data recording unit 16, direction sensor 18, operating unit 34, display unit 35, voice input unit 36, voice output unit 37, and communication unit 38 are connected to the navigation processing unit 17.

Also, the navigation processing unit 17 is connected to the automatic transmission control unit 10, a front monitoring device 48 which is attached to a predetermined location on the front end of the vehicle and is for monitoring the front of the vehicle, a back camera (rear monitoring camera) 49 which is attached to a predetermined location on the rear end of the vehicle, which serves as an image-capturing device for photographing the rear of the vehicle and which serves as a rear monitoring device, an accelerator sensor 42 serving as an engine load detecting device for detecting the operation of the accelerator pedal by the driver with the degree of opening of the accelerator, a brake sensor 43 serving as a control detecting unit for detecting the operation of the brake pedal by the driver with the amount of brake-stepping, a vehicle speed sensor 44 serving as a vehicle speed detecting unit for detecting the vehicle speed, and so forth. Note that the accelerator sensor 42, brake sensor 43 and so forth make up the operating information detecting unit for detecting operating information of the vehicle by the driver. Also, instead of a back camera 49, various types of cameras can be used as imaging devices, such as a front camera for the purpose of monitoring the front of the vehicle or a side camera for the purpose of monitoring the side of the vehicle.

The GPS sensor 15 detects the current location on Earth by receiving radio waves generated by a satellite, and also detects the time of day. With an embodiment of the present invention, an arrangement is made wherein a GPS sensor 15 is used as the current location detecting unit, but instead of this GPS sensor 15, an unshown distance sensor, steering sensor, altimeter and so forth can be used individually or in combination. Also, a gyro sensor, geomagnetic sensor or the like can be used as the direction sensor 18. Note that with the present embodiment, a direction sensor 18, vehicle speed sensor 44, and so forth are provided, but in the case of using a GPS sensor which has a function for detecting vehicle direction, vehicle speed, and so forth, the direction sensor 18, vehicle speed sensor 44, and so forth are not needed.

The data recording unit 16 has a map database made up of map data files, and map data is recorded into this map database. This map data includes intersection data relating to intersections, node data relating to nodes, road data related to road links, search data which is processed for searching, and facility data relating to facilities, as well as including object feature data relating to object features on the road.

The object features are display objects installed or formed on roads for providing various types of information on driving to a driver, or performing various types of guidance on driving, and comprise display lines, road signs, pedestrian crossings, manhole covers, traffic signals, and so forth. The display lines include stop lines on the road for stopping vehicles, vehicular lane borderlines for classifying each lane, compartment lines indicating parking spaces, and so forth. The road signs include traffic classification signs indicating the traveling direction of each lane using an arrow, and guidance signs for announcing a temporary stop point beforehand, such as "STOP", guiding directions such as "turn here to go to so-and-so" and the like, and so forth. The object feature data includes positional information wherein the position of each object feature is represented with coordinates or the like, image information wherein each object feature is represented with an image, and so forth. Note that the temporary stop point includes entrance points to a right-of-way road from a non-right-of-way road, railroad crossings, intersections with a red signal blinking, and so forth.

Also, the road data regarding the above-mentioned lanes includes lane data made up of lane numbers assigned for each lane on a road, lane position information, and so forth. Data for outputting predetermined information using the voice output unit 37 is also recorded in the data recording unit 16.

Further, with the data recording unit 16, a statistics database made up of statistics data files, a driving history database made up of driving history data files, and so forth are formed. Statistics data is recorded in a statistics data file, and driving history data is recording in a driving history data file, either of which is recorded as record data.

The statistics data is a record of traffic information provided in the past, i.e., history information representing history, which is created by using the traffic information provided in the past by an unshown road traffic information center or the like such as the VICS (Vehicle Information and Communication System) center or the like serving as an informant, road traffic census information serving as data indicating traffic volume using the road traffic census provided by the Ministry of Land, Infrastructure and Transport, the road time-table information provided by the Ministry of Land, Infrastructure and Transport, and so forth independently, or in combination, and subjecting those to industrial process, and statistics processing as necessary. Note that the statistics data can be added with heavy traffic forecast information for forecasting heavy traffic situations, and so forth. In this case, when creating the statistics data, detailed conditions such as date and time, day of the week, weather, various types of events, season, information of facilities (existence of large-sized facilities such as a department store, supermarket, and so forth), and so forth are added to the history information.

Also, the data items of the statistics data comprise a link number regarding each of road links, a direction flag indicating the direction of travel, an information classification indicating the type of information, the degree of heavy traffic for predetermined timing, link duration indicating duration for each predetermined timing when traveling along each of the road links, average data for every day of the week of the link duration, e.g., day-of-the-week average data, and so forth.

Also, the driving history data, which is collected from multiple vehicles, i.e., a self-vehicle or the other vehicles by the information center 51, is record information indicating the vehicle driving record in the roads where each of the vehicles ran, i.e., driving record, and is calculated as probe data based on driving data, and is accumulated.

The data items of the driving history data comprises link duration for each predetermined timing when traveling along each of the road links, the degree of heavy traffic for each predetermined timing when traveling along each of the road links, and so forth. Note that the statistics data can be added with the driving history data. Also, with the present embodiment, the degree of heavy traffic is used as a heavy traffic index indicating the degree of heavy traffic, which is classified into heavy traffic, congestion, and light traffic.

The data recording unit 16 includes unshown disks such as a hard disk, CD, DVD, optical disc, and so forth to record the various types of data, and also includes unshown heads such as a read/write head for reading or writing various types of data, and so forth. Also, with the data recording unit 16, a memory card or the like can be used. Note that each of the disks, memory card, and so forth make up an external storage device.

With the present embodiment, the map database, statistics database, driving history database, and so forth are arranged to be formed in the data recording unit 16, but the map database, statistics database, driving history database, and so forth can be formed in the information center 51.

Also, the navigation processing unit 17 comprises a CPU 31 serving as a control device for controlling the entirety of the navigation device 14, and also serving as a computing device, RAM 32 which is used as working memory when the CPU 31 performs various types of computing processing, ROM 33 in which various types of programs for performing route searching and route guidance to a destination as well as a control program are recorded, and unshown flash memory which is used to record various types of data, programs, and so forth. Note that the RAM 32, ROM 33, flash memory, and so forth make up an internal storage device.

With the present embodiment, various types of programs can be recorded in the ROM 33, and various types of data can be recorded in the data recording unit 16, but the programs, data, and so forth can be recorded in a disk or the like. In this case, the programs, data, and so forth can be read out from the disk or the like to be written in the flash memory. Accordingly, the programs, data, and so forth can be updated by replacing the disk or the like. Also, a program, data, and so forth for control by the automatic transmission control unit 10 can be recorded on the disk and so forth. Further, the program, data, and so forth can be also received via the communication unit 38 to be written in the flash memory of the navigation processing unit 17.

The operating unit 34 is for correcting the current location at the time of start of traveling, inputting a departure location and a destination, inputting passing points, and activating the communication unit 38 by the driver operating the operating unit 34. A keyboard, mouse, and so forth, which are disposed independently from the display unit 35, can be used as the operating unit 34. Also, a touch panel which enables predetermined input operations by touching or clicking an image operating unit such as various types of keys, switches, buttons, or the like displayed with an image on the screen formed on the display unit 35 can be used as the operating unit 34.

Note that a display is used as the display unit 35. On various types of screens formed on the display unit 35 the direction of a vehicle can be displayed as a self-vehicle direction with the current location of a vehicle as a self-vehicle, a map, a searched route, the guidance information along the searched route, traffic information, and so forth can be displayed, the distance up to the next intersection in the searched route, and the direction of travel at the next intersection, and so forth, can be displayed, and in addition, the operating guidance, operating menu, and key guidance of the image operating unit, operating unit 34, voice input unit 36, and so forth can be displayed, and the program of an FM multiplex broadcast, and so forth can be displayed.

Also, the voice input unit 36 comprises an unshown microphone and so forth, whereby necessary information can be input by voice. Further, the voice output unit 37 comprises an unshown voice synthesizer, and unshown speakers, and the searched route, guidance information, traffic information, or the like is output from the voice output unit 37, for example, with voice synthesized by the voice synthesizer.

The communication unit 38 includes a beacon receiver for receiving various types of information such as the current traffic information, common information transmitted from the road traffic information center via an electric-wave beacon device, optical beacon device, or the like disposed along a road as an electric-wave beacon, optical beacon, or the like, an FM receiver for receiving such information as an FM multiplex broadcast via an FM broadcasting station, and so forth. Note that the traffic information includes heavy traffic information, restriction information, parking information, traffic accident information, the congestion status information of a rest area, and so forth, and the common information includes news, weather forecast, and so forth. Also, the beacon receiver and FM receiver are arranged so as to be unitized and disposed as a VICS receiver, but can be disposed separately.

The traffic information includes an information classification indicating the classification of information, a mesh number for identifying mesh, a link number for pinpointing a road link connecting between two points, e.g., intersections, and also indicating the classification of up/down road, and link information indicating the content of the information to be provided corresponding to the link number. For example, in the event that the traffic information is heavy traffic information, the link information comprises heavy traffic head data indicating the distance from the start point of the road link to the head of heavy traffic, the degree of heavy traffic, heavy traffic length indicating the distance from the head of the road link to the end of heavy traffic, link duration indicating duration necessary for traveling along the road link, and so forth.

The communication unit 38 can receive various types of information such as the traffic information, common information, and so forth from the information center 51 via the network 63 as well as data such as the map data, statistics data, driving history data, and so forth.

Accordingly, the information center 51 comprises a server 53, a communication unit 57 connected to the server 53, a database (DB) 58 serving as an information recording unit, and so forth. The server 53 comprises a CPU 54 serving as a control device, and also serving as a computing device, RAM 55, ROM 56, and so forth. Also, the same data as the various data recorded in the data recording unit 16, e.g., the map data, statistics data, driving history data, and so forth are recorded in the database 58. Further, the information center 51 can provide various types of information such as the current traffic information, common information, and so forth transmitted from the road traffic information center, and driving history data collected from multiple vehicles (self-vehicle and other vehicles) in real time.

The front monitoring device 48 comprises a laser radar, a radar such as a millimeter-wave radar or the like, an ultrasonic sensor, or the like, or a combination of those, monitors a preceding vehicle which is a vehicle traveling ahead, and monitors temporary stop points and obstacles. Also, the front monitoring device 48 detects relative speed indicating relative vehicle speed as to the preceding vehicle as the circumferential information of a vehicle, approach speed as to a temporary stop point, approach speed for obstacles, and so forth, and calculates the distance between vehicles, inter vehicle time, and so forth.

The back camera 49 is made up of a CCD device, which is attached in a state in which the optical axis is directed diagonally downward, shoots vehicles behind which are other vehicles traveling behind the vehicle, buildings and structures of the road side, and so forth as photographed objects as well as the above object features, and generates the image data of the photographed objects which were photographed to transmit this to the CPU 31. The CPU 31 reads in the image data, and recognizes the respective photographed objects within the image as objects to be recognized by subjecting the image data to image processing. With the present embodiment, a CCD device is used as the back camera 49, but a C-MOS device or the like can be used.

Note that the navigation system, navigation processing unit 17, CPU 31, CPU 54, server 53, and so forth serve as a computer by being used independently, or in combination of two or more, and perform computing processing based on various types of programs, data, and so forth. Also, the data recording unit 16, RAM 32, RAM 55, ROM 33, ROM 56, database 58, flash memory, and so forth make up a recording medium. An MPU or the like can be also used instead of the CPU 31 and CPU 54 as a computing device.

Next, description will be made regarding the basic operation of the navigation system having the above configuration.

First, upon the operating unit 34 being operated by a driver to activate the navigation device 14, the unshown navigation initializing processing means of the CPU 31 performs navigation initializing processing, reads in the current location of the vehicle detected by the GPS sensor 15, and the self-vehicle direction detected by the direction sensor 18, and also initializes various types of data. Next, the unshown matching processing means of the CPU 31 performs matching, and pinpoints the current location by determining on which road link the current location is positioned, based on the course of the current location that has been read in, and the shapes and array of the respective road links making up the roads around the current location.

Also, with the present embodiment, the matching processing means pinpoints the current location based on the positions of the respective object features which are the photographed objects photographed by the back camera 49.

Accordingly, the unshown image-recognition processing means of the CPU 31 perform image recognition processing to read in image data from the back camera 49, and recognize the object features within the image made up of the image data. Also, the unshown distance calculation processing means of the CPU 31 perform distance calculation processing to calculate the distance from the back camera 49 to the actual object feature based on the position of the object feature within the image. Subsequently, the current-location pinpointing processing means of the matching processing means perform current-location pinpointing processing to read in the distance, and also read out the object data from the data recording unit 16 to obtain the coordinates of the object feature, and pinpoint the current location based on the obtained coordinates and distance.

Also, the unshown lane-identification processing means of the CPU 31 perform lane identification processing to identify the lane where the vehicle is traveling, that is to say, the driving lane, by comparing the object feature recognized based on the image data with the object feature read out from the data recording unit 16 in the same way.

Note that in the event that the object feature is formed of a ferromagnetic substance, such as a manhole cover or the like, the lane- identification processing means read in the sensor output of the magnetic-field sensor, and determine whether or not there is a manhole cover or the like based on the sensor output, whereby the driving lane can also be identified based on the determination result. Further, the current location is detected by using a high-precision GPS sensor 15, whereby the current location can be identified precisely and the driving lane can be detected based on the detection result. Also, at the same time when subjecting the image data of display lines to image processing, the sensor output of the magnetic-field sensor, the current location, and so forth are combined as necessary, whereby the driving lane can be identified.

Subsequently, the unshown basic-information obtaining processing means of the CPU 31 perform basic information obtaining processing to obtain the map data by reading out the map data from the data recording unit 16, or by receiving the map data from the information center 51 or the like via the communication unit 38. Note that in the event of obtaining the map data from the information center 51 or the like, the basic-information obtaining processing means download the received map data to the flash memory.

Subsequently, the unshown display processing means of the CPU 31 perform display processing to form various types of screen on the display unit 35. For example, the map display processing means of the display processing means perform map display processing to form a map screen on the display unit 35, and display the surrounding map on the map screen, and also display the direction of a vehicle as a self-vehicle direction with the current location which is the self-vehicle location.

Accordingly, the driver can drive the vehicle in accordance with the map, self-vehicle location, and self-vehicle direction.

Also, upon the driver operating the operating unit 34 to input a destination, the unshown destination setting processing means of the CPU 31 perform destination setting processing to set a destination. Note that a departure location can be input and set as necessary. Also, a predetermined point can be registered beforehand, and the registered point can be set as a destination. Subsequently, upon the driver operating the operating unit 34 to input searching conditions, the unshown searching-conditions setting processing means of the CPU 31 perform searching-conditions setting processing to set searching conditions.

Thus, upon the destination and searching conditions being set, the unshown route-searching processing means of the CPU 31 perform route-searching processing to read in the current location, destination, searching conditions, and so forth, and also read out the search data and so forth from the data recording unit 16, search the route from the departure location represented with the current location to the destination using the searching conditions based on the current location, destination, and search data, and output the route data indicating a searched route. At this time, the route wherein the sum of the link costs appended for each road link is the smallest is taken as a searched route.

Also, in the case wherein multiple lanes are formed on the road, and also in the case of the driving lane being identified, the route searching processing means search the search route with a lane as a unit. In this case, lane numbers of the driving lanes and so forth are also included in the route data.

Note that route searching processing can be performed at the information center 51. In this case, the CPU 31 transmits the current location, destination, searching conditions, and so forth to the information center 51. Upon the information center 51 receiving the current location, destination, searching conditions, and so forth, the unshown route-searching processing means of the CPU 54 perform the same route-searching processing as the CPU 31 to read out the search data from the data base 58, search the route from the departure location to the destination based on the current location, destination, and search data, and output route data indicating a searched route. Next, the unshown transmission processing means of the CPU 54 perform transmission processing to transmit the route data to the navigation device 14.

Subsequently, the unshown guidance processing means of the CPU 31 perform guidance processing to perform route guidance. Accordingly, the route display processing means of the guidance processing means perform route display processing to read in the route data, and display the searched route on the map screen in accordance with the route data.

Now, with the route guidance, in the case that it is necessary to turn the vehicle to the left or right at a predetermined intersection, the aforementioned intersection is set as a guidance point and also as a guidance intersection. Therefore, the guidance intersection setting processing means of the guidance processing means performs guidance intersection setting processing, and according to the route data, that is to say, based on the searched route, determines whether or not there is an intersection at which the vehicle must be turned to the left or right, and in the case of an intersection at which the vehicle must be turned to the left or right, this intersection is set as a guidance intersection.

Also, in the event that a searched route has been searched in increments of individual lanes, recommended lane setting processing means of the guidance processing means perform recommended lane setting processing, and select and set as a recommended lane a lane which is suitable for entering the guidance intersection, a lane suitable for leaving the guidance intersection, or the like, at the time of passing through a guidance intersection for example. The route display processing means then display the searched route on the map screen, and also display an expanded view of the road where the vehicle is traveling in a predetermined region in the map screen, i.e., displays an expanded road view, and performs lane guidance with the expanded road view. In this case, each lane and the recommended lane thereof are displayed on the expanded road view.

Next, the voice output processing means of the guidance processing means performs voice output processing, so as to output route guidance from the voice output unit 37 by voice. To this end, the route guidance point setting processing means of the guidance processing means perform route guidance point setting processing to set one or more route guidance points at a point at a preset distance on the near side (closer to the self-vehicle) from the guidance intersection on the searched route. Also, point guidance processing means of the guidance processing means perform point guidance processing, and upon the vehicle reaching each route guidance point, perform route guidance regarding the guidance intersection, concerning contents set beforehand for each route guidance point, such as the distance from the self-vehicle to the guidance intersection, tuning left or right at the guidance intersection, and so forth. Also, in the event that a recommended lane has been set, the lane guidance processing means of the point guiding processing means perform lane processing regarding contents set beforehand for each route guidance point, such as each recommended lane from the self-vehicle location to the guidance intersection, recommended lanes beyond the guidance intersection, and so forth.

Also, guidance point expanded view display processing means of the guidance processing means perform guidance point expanded view display processing, so as to read out intersection data, and display an expanded view of the guidance intersection on the predetermined region of the map screen before the vehicle reaches the guidance intersection, i.e., display an intersection expanded view, and perform route guidance by the intersection expanded view. In this case, a map of around the guidance intersection, searched route, landmarks such as facilities or the like serving as a reference point at the guidance intersection, or the like, are displayed in the intersection expanded view. Also, in the event that multiple lanes are formed on a road entering the guidance intersection (hereafter referred to as "entering road") or a road exiting the guidance intersection (hereafter referred to as "exiting road"), and lane guidance is being performed, the guidance point expanded view display processing means display a recommended lane on the intersection expanded view. To this end, the intersection data includes data such as the name of the intersection, entering roads, exiting roads, presence/absence of traffic signals, type of traffic signal, and so forth.

Now, in the route guidance point setting processing, each of the route guidance points are uniformly set based on the distance from the guidance intersection, so there may be cases in performing route guidance at the timing of the vehicle reaching each route guidance point wherein, upon the vehicle driving through an intersection on the near side of the guidance intersection while route information is being performed, the contents of guidance which the driver recognizes and the contents of guidance performed in the route guidance do not match. For example, in a case of using the number of roads which intersect the searched route up to the guidance intersection is used as counted branch elements which are branch elements to be counted, the number of roads which the driver recognizes, and the number of roads guided by the route guidance, do not match.

Accordingly, with the present invention, route guidance region change processing means of the guidance processing means perform route guidance region change processing such that, in a situation wherein the contents of guidance which the driver recognizes and the contents of guidance performed in the route guidance are not going to match, route guidance is not performed in the route guidance point but rather the route guidance region is changed and shifted to the near side or beyond (toward the guidance intersection side).

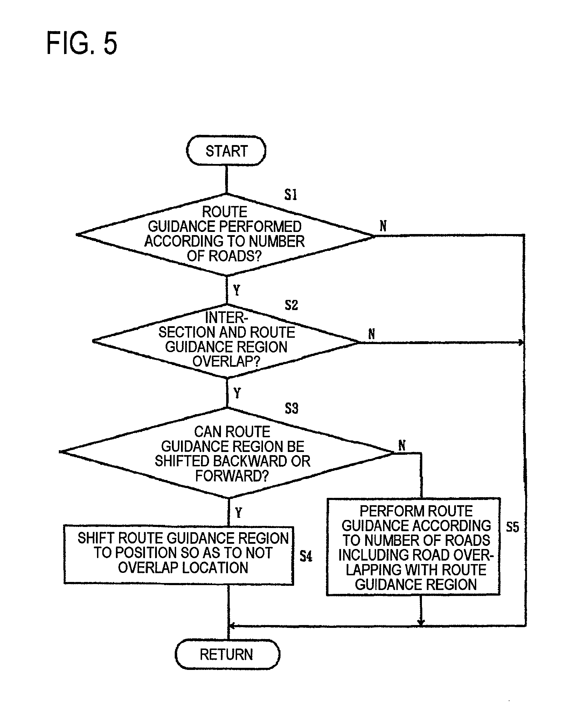

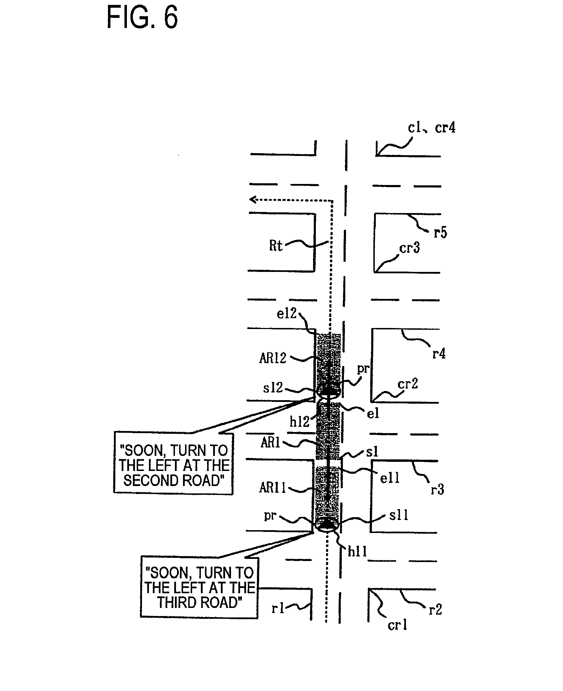

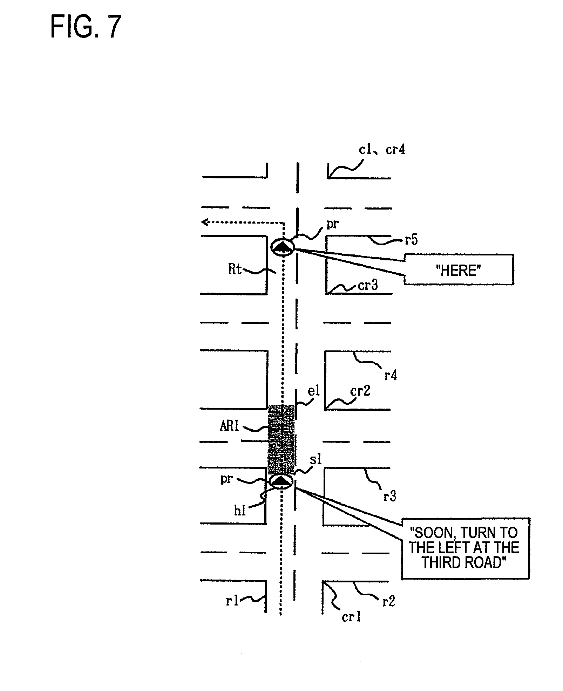

Fig. 5 is a flowchart illustrating the operations of the guidance processing means according to the present embodiment, Fig. 6 is a first diagram illustrating an example of route guidance according to the present embodiment, and Fig. 7 is a second diagram illustrating an example of route guidance according to the present embodiment.

In the drawings, ri (i = 1, 2, ···) represents roads, and crj (j = 1, 2, ···) represents intersections, with roads r1 and r2 intersecting at intersection cr1, roads r1 and r3 at intersection cr2, roads r1 and r4 at intersection cr3, and roads r1 and r5 at intersection cr4. Also, Rt represents a searched route, with the searched route Rt set so as to pass over the road r1, turn left at intersection cr4, and turn off to road r5, the intersection cr4 having been set to guidance intersection c1. Also, pr represents the self-vehicle position, and h1 represents the route guidance point according to the originally set design, which also is a standard route guidance point. According to design, upon the vehicle reaching the route guidance intersection h1, route guidance is performed regarding the guidance intersection c1, and a preset message is output by voice.

Also, AR1 is the route guidance region formed within a region from a route guidance start point s1 where the route guidance starts, to a route guidance end point e1 where the route guidance ends, and a distance Lar over which the route guidance region AR1 is formed can be calculated based on the time from starting to ending of the route guidance, and the vehicle speed, based on the content of the route guidance.

First, route guidance determination processing means of the route guidance region change processing means perform route guidance determination processing, and determine whether or not the next route guidance is to be performed according to the number of roads. In the event that the route guidance is to be performed according to the number of roads, change condition determination processing means of the route guidance region change processing means perform change condition determination processing, calculate the route guidance region AR1 from the stating to the ending of the route guidance, based on the position of the route guidance point h1 and the distance La, so as to determine whether or not a first change condition holds according to whether or not the intersection and the route guidance region AR1 overlap.

Here, the intersection and the route guidance region AR1 are determined to be overlapping in the following cases.
- The route guidance start point s1 is set to the near side of the intersection cr2, the route guidance end point e1 is set beyond the intersection cr2, and the vehicle passes through the intersection cr2 while route guidance is being performed, as shown in Fig. 2.
- The route guidance start point s1 is set within the intersection cr2, the route guidance end point e1 is set beyond the intersection cr2, and the route guidance starts within the intersection cr2, as shown in Fig. 3.
- The route guidance start point s1 is set to the near side of the intersection cr2, the route guidance end point e1 is set within the intersection cr2, and the route guidance ends within the intersection cr2, as shown in Fig. 4.

In the event that the intersection and the route guidance region AR1 overlap, such that the first changing condition holds, the change conditions determination processing means determine whether or not second changing conditions hold, according to whether the route guidance region AR1 can be changed so as to be moved forward or backward.

In this case, with the distance of the route guidance region AR1 as La, and the distance cr1-cr2 between the intersection cr2 and the adjacent intersection cr1, i.e., the inter-intersection distances as L1 and L2, in the event that the distance La is longer than the inter-intersection distance L1, changing the route guidance region AR1 to shift to the near side causes a post-shifting route guidance region AR11 to overlap with the intersection cr1. Also, in the event that the distance La is longer than the inter-intersection distance L2, changing the route guidance region AR1 to shift to the far side causes a post-shifting route guidance region AR12 to overlap with the intersection cr3.

Now, in the event that the distance La is equal to or shorter than the inter-intersection distances as L1 and L2, the route guidance region AR1 can be changed so as to be moved forward or backward, but in the event that the distance La is longer than the inter-intersection distances as L1 and L2, the route guidance region AR1 cannot be changed so as to be moved forward or backward.

In the event that the distance La is equal to or shorter than the inter-intersection distances as L1 and L2, and the second changing condition holds, the region changing means of the route guidance region change processing means perform region setting processing, and as shown in Fig. 6, change the route guidance region AR1 so as to not overlap the intersection cr2.

In Fig. 6, AR11 is the route guidance region in the event of shifting the route guidance region AR1 toward the near side, this route guidance region AR11 being set between the route guidance start point s11 and the route guidance end point e11. In this case, the point guidance processing means output a message such as "soon, turn to the left at the third road" or the like.

Also, AR12 is the route guidance region in the event of shifting the route guidance region AR1 toward the far side, this route guidance region AR12 being set between the route guidance start point s12 and the route guidance end point e12. In this case, the point guidance processing means output a message such as "soon, turn to the left at the second road" or the like.

Note that with the road width of the road r3 intersecting the road r1 at the intersection cr2 as w, the route guidance end point e11 is set at a point on the near side by a distance of w/2 from the center of the intersection cr2, and the route guidance start point s12 is set at a point on the far side by a distance of w/2 from the center of the intersection cr2.

In the event that the distance La is longer than the inter-intersection distances as L1 and L2, and the second changing condition does not hold, the region changing means of the route guidance region change processing means do not change the route guidance region, the point guidance processing means perform route guidance according to the number of roads r3 through r5 including the road r3 of the intersection cr3 which overlaps the route guidance region AR1, output a message such as "soon, turn to the left at the third road" or the like, and output no messages between the intersections cr1 and cr2, and between the intersections cr2 and cr3. However, just so that the vehicle does not pass straight through the intersection cr1, a brief message such as "here" or a sound effect is output immediately before the guidance intersection c1.

To this end, branch element calculation processing means perform branch element calculation processing so as to calculate the number of roads r3 through r5 intersecting with the road r1 at the intersections cr2 through cr4 from the self-vehicle position pr to the guidance intersection c1 (three in this case), and perform route guidance based on the point guidance processing means perform route guidance based on the number of roads r3 through r5. Note that in this case, the road r5 intersecting the road r1 at the guidance intersection c1 is also a road regarding which calculation is performed.

In this way, in the event that the route guidance region AR1 and a predetermined intersection overlap, the route guidance region AR1 is changed to a position so as to not overlap the intersection, thereby elimination situations wherein the vehicle travels through an intersection at the near side of the guidance intersection c1 while the route guidance is being performed. Accordingly, the number of roads intersected at intersections up to the guidance intersection which the driver recognizes, and the number of roads guided by the route guidance, can be made to match. Consequently, the vehicle can be driven along the searched route Rt in a sure manner by following the route guidance.

Next, the flowchart will be described.

First, in Step S1, determination is made regarding whether or not route guidance is performed based on the number of roads. In the event that route guidance is performed based on the number of roads, the flow proceeds to step S2, and if not, the flow returns.

In Step S2, determination is made regarding whether or not the intersection and route guidance region overlap. In the event that the vehicle will pass through the intersection at the same time as the voice guidance being given, the flow proceeds to step S3, and if not, the flow returns.

In Step S3, determination is made regarding whether or not the route guidance region can be shifted forward or backward. In the event that the route guidance region can be shifted forward or backward, the flow proceeds to step S4, and if not, the flow returns.

In Step S4, the route guidance region is shifted to a position not overlapping the intersection.

In Step S5, route guidance is performed by the number of roads including the road with which the route guidance region overlaps.

With the present embodiment, the branch element calculation processing means calculate the number of roads r3 through r5 as counted branch elements from the self-vehicle position to the guidance intersection c1, but an arrangement may be made wherein the number of intersections cr3 and cr4 from the self-vehicle position to the guidance intersection c1, instead of the roads r3 through r5. In this case, the guidance intersection c1 is also included in the calculated intersections.

Note that the present invention is not restricted to the above-described embodiments, and that various modifications can be made based on the essence of the present invention, and these should not be excluded from the scope of the present invention.

A route guidance system comprises: a current-location detecting unit for detecting the current location of a self-vehicle; a route-searching processing unit for searching a searched route up to a destination based on the self-vehicle location; a guidance-intersection setting processing unit for setting a guidance intersection based on the searched route; a route guidance point setting processing unit for setting a route guidance point on the near side of a guidance intersection; a change conditions determination processing unit for calculating a route guidance region from the start to the end of route guidance based on the route guidance point and the contents of route guidance, and determining whether or not the route guidance region overlaps a predetermined intersection from the self-vehicle to the guidance intersection; and a region setting processing unit for changing the route guidance region in the event that the route guidance region overlaps with the predetermined intersection.

## Claims

1. A route guidance system comprising:
a current-location detecting unit(5) for detecting the current location of a self-vehicle as a self-vehicle location;
route-searching processing means for searching a searched route up to a destination based on said self-vehicle location;
guidance-intersection setting processing means for setting a guidance intersection based on said searched route;
route guidance point setting processing means for setting a route guidance point at a predetermined point on the near side of a guidance intersection, for performing route guidance regarding the guidance intersection;
change conditions determination processing means for calculating a route guidance region from the start to the end of route guidance based on the position of the route guidance point and the contents of route guidance, and determining whether or not said route guidance region overlaps a predetermined intersection from the self-vehicle location to the guidance intersection; and
region setting processing means for changing the route guidance region in the event that the route guidance region overlaps with the predetermined intersection.

2. A route guidance system according to Claim 1, wherein, in the event that the distance of the route guidance region is equal to or shorter than an inter-intersection distance between the intersection with which the route guidance region overlaps and an adjacent intersection, said change conditions determination processing means changes the route guidance region.

3. A route guidance system according to Claim 1, further comprising point guidance processing means for performing route guidance based on the number of branch elements from the self-vehicle location to the guidance intersection, in the event that the distance of the route guidance region is longer than an inter-intersection distance.

4. A route guidance system according to Claim 3, wherein said branch element is the number of roads intersecting with the road over which the vehicle will travel from the self-vehicle location to the guidance intersection.

5. A route guidance system according to Claim 3, wherein said branch element is the number of intersections from the self-vehicle location to the guidance intersection.

6. A route guidance method comprising the steps of: detecting the current location of a self-vehicle as a self-vehicle location; searching a searched route up to a destination based on said self-vehicle location; setting a guidance intersection based on said searched route; setting a route guidance point at a predetermined point on the near side of a guidance intersection, for performing route guidance regarding the guidance intersection; calculating a route guidance region from the start to the end of route guidance based on the position of the route guidance point and the contents of route guidance, and determining whether or not said route guidance region overlaps a predetermined intersection from the self-vehicle location to the guidance intersection; and changing the route guidance region in the event that the route guidance region overlaps with the predetermined intersection.
